(19) Europäisches Patentamt
European Patent Office
Office européen des brevets

(11) **EP 3 887 418 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **19805563.4**

(22) Anmeldetag: **11.11.2019**

(51) Internationale Patentklassifikation (IPC):
**C08G 18/42** *(2006.01)*    **B60R 13/08** *(2006.01)*
**C08G 18/54** *(2006.01)*    **C08G 18/76** *(2006.01)*
**F02B 77/13** *(2006.01)*

(52) Gemeinsame Patentklassifikation (CPC):
**C08G 18/7664; C08G 18/4208; C08G 18/542;**
C08G 2110/0008; C08G 2110/0033;
C08G 2110/0083; C08G 2350/00

(86) Internationale Anmeldenummer:
**PCT/EP2019/080863**

(87) Internationale Veröffentlichungsnummer:
**WO 2020/108972 (04.06.2020 Gazette 2020/23)**

(54) **POLYURETHAN-SCHAUMSTOFF-FORMULIERUNG UND SCHALLISOLIERUNGEN MIT DARAUF BASIERENDEN SCHÄUMEN (MOTORKAPSEL)**

POLYURETHANE FOAM FORMULATIONS AND NOISE INSULATIONS WITH FOAMS (MOTOR CAPSULE) BASED THEREON

FORMULATION DE MOUSSE DE POLYURÉTHANE ET ISOLATIONS ACOUSTIQUES COMPORTANT DES MOUSSES À BASE DE CETTE FORMULATION (ENCAPSULAGE DE MOTEUR)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2018 DE 102018130184**

(43) Veröffentlichungstag der Anmeldung:
**06.10.2021 Patentblatt 2021/40**

(73) Patentinhaber: **Adler Pelzer Holding GmbH 58099 Hagen (DE)**

(72) Erfinder:
• **BECKER, Helmut 44894 Bochum (DE)**
• **SCHULZE, Volkmar 84069 Schierling (DE)**

(74) Vertreter: **Hannke Bittner & Partner mbB Regensburg Prüfeninger Straße 1 93049 Regensburg (DE)**

(56) Entgegenhaltungen:
WO-A1-00/73368          WO-A1-2018/165844
WO-A1-2019/194966       US-A1- 2008 015 275
US-A1- 2014 315 129     US-B1- 8 906 975

EP 3 887 418 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist eine Polyurethan-Schaumstoff-Formulierung auf Basis von an sich konventionellen Polyether- und Novolac-Polyolen mit insbesondere MDI zur Herstellung von weichelstischen PUR-Formschäumen mit viskoelastischen Eigenschaften insbesondere für Schallisolierungen mit darauf basierenden Schäumen.

Weichelastische sowie viskoelastische Polyurethan-Formschäume sind im Bereich der Fahrzeugakustik weit verbreitet. Übliche weichelastische Schäume werden allgemein dem "high resilience"- also hochelastischen Typ zugeordnet und weisen eine ausgeprägte Federcharakteristik mit spontanem bzw. schnellem Rückstellverhalten auf. Dem entgegen stehen die viskoelastischen Schaumtypen, die sich als wesentliches Unterscheidungsmerkmal zu weichelastischen Schaumtypen durch ein verzögertes Erholungsverhalten nach Druckverformung auszeichnen. Dabei erreichen viskoelastische Schäume im Vergleich zu "high resilience" Schäumen in der Regel wesentlich bessere Dämpfungseigenschaften.

Viskoelastisch geformte PUR-Schaumstoffe basieren üblicherweise auf MDI und einer Mischung aus Polyetherpolyolen, meist auf Glycerinbasis. Während tendenziell Polyole mit hohem Molekulargewicht und niedriger Funktionalität für weichelastische Schaumtypen verwendet werden, führt ein niedriges Molekulargewicht, insbesondere in Kombination mit hohen Funktionalitäten, zu bevorzugten Hartschäumen. Für die spezifische Anwendung in viskoelastischen Formulierungen wird der gewünschte Grad an viskoelastischen Eigenschaften durch die Menge an weichen und harten Segmenten innerhalb des Polymers ausgeglichen.

Im Gegensatz zu typischerweise im Blockschaumverfahren hergestellten, weich-elastischen oder auch viskoelastischen Schäumen, die in der Matratzen- oder Polsterindustrie zum Einsatz kommen, werden akustisch wirksame Bauteile im Bereich der Fahrzeugakustik bevorzugt direkt als Formteile mit der gewünschten Bauteilgeometrie hergestellt. Dazu kommen in der Regel Zweikomponenten-Systeme zum Einsatz, wobei eine Komponente des Reaktivsystems diverse (Poly)-Isocyanate darstellen, die zweite Komponente aus einem komplexen Gemisch meist unterschiedlicher Polyole, Treibmittel, Katalysatoren, Stabilisatoren sowie gegebenenfalls weiterer Additive besteht.

Die typischen Materialeigenschaften dieser Schäume werden primär von den eingesetzten Polyoltypen, deren Mengenverteilung, dem Vernetzungsgrad und dem gewählten Raumgewicht bestimmt. Im Hinblick auf die beabsichtigte Verwendung für akustisch wirksame Feder-Masse-Verkapselungen von Elektromotoren von Kraftfahrzeugen, aber auch unter Berücksichtigung hohen Temperaturen in Kombination mit Feuchtigkeitsbedingungen, die häufig zu einem frühzeitigen Altern oder sogar zu einer hydrolytischen Material-Zersetzung führen, werden entweder Polyester- oder Polyetherpolyole verwendet. Für aktuelle Anwendungen werden hauptsächlich Standardschäume (HR-Schäume) verwendet. Darüber hinaus sind diese Standardschäume (basierend auf herkömmlicher Polyetherbasis weniger empfindlich gegen hydrolytische Zersetzung als auf Polyester basierende Typen, jedoch nicht weit genug stabil genug, um den oben genannten streng modifizierten Alterungsbedingungen zu widerstehen. Grundsätzlich führen hohe Temperaturen zu vorzeitiger Materialalterung, während trockene Bedingungen zu Sprödigkeit führen und hydrolytische Bedingungen (infolge von hohen Temperaturen in Kombination mit Feuchtigkeit) zu Erweichungseffekten, zum Verlust mechanischer und akustischer Eigenschaften oder sogar zu einer vollständigen Materialzersetzung führen.

Die jeweiligen Polyole unterscheiden sich in im Wesentlichen in Bezug auf Funktionalität, Reaktivität und Molekularmasse, wobei die Funktionalität und die grundsätzliche Struktur unmittelbar vom eingesetzten Startermolekül bestimmt wird. Als chemisches Treibmittel wird der Polyolkomponente meist Wasser zugesetzt, wobei das Wasser mit dem (Poly)-Isocyanat reagiert und Kohlendioxid freigesetzt wird, das als eigentliches Treibmittel fungiert.

Weichelastische Schäume kommen in unterschiedlichen Ausführungen für ebenso unterschiedliche Akustikanwendungen zum Einsatz. Die Anwendungen umfassen reine Absorber bis hin zu Feder-Masse-Aufbauten. Die Dämmwirkung erhöht sich dabei in Abhängigkeit vom Raumgewicht bzw. der kombinierten Masseschicht. Im Vergleich zu weichelastischen "high resilience" Typen zeichnen sich viskoelastische Formschäume meist durch bessere Dämpfungseigenschaften aus und werden deshalb insbesondere im Premiumsektor bevorzugt eingesetzt. Dieses speziell viskoelastische Materialverhalten lässt sich in pneumatische Effekte und strukturelle Eigenschaften unterteilen, stellt aber meistens eine Kombination aus beiden dar. Der sogenannte pneumatische ("Asthma")-Effekt beruht auf sehr kleiner Porengröße, oft auch in Kombination mit nicht vollständig offener Zellstruktur, die den Luftaustausch bei Kompression sowie während der Erholung verlangsamt. Die strukturellen Eigenschaften ergeben sich aus der Kombination von weichen und harten Segmenten innerhalb der Polymermatrix und lassen sich entsprechend über die Mengenverteilung unterschiedlich funktioneller Polyole sowie die genannten Primär-Parameter steuern.

US 2012/0009407 A1 offenbart einen harten Polyurethanschaum, der das Reaktionsprodukt einer Isocyanatzusammensetzung und eine Harzzusammensetzung einschließt, die ein Novolac-Polyol mit einer durchschnittlichen Hydroxyl-funktionalität enthält von 2 bis 30, berechnet durch Dividieren des Gewichtsmittels des Molekulargewichts des Novolac-Polyols durch das Äquivalentgewicht des Novolac-Polyols.

Das Novolac-Polyol liegt in einer Menge von 3 bis 65 Gewichtsteilen pro 100 Gewichtsteile der Harzzusammensetzung vor.

US 2015/0099851 A1 beschreibt Harze aus Cashewnussschalenflüssigkeit und Vinylkohlenwasserstoffen, die als Vorläufer für die Herstellung von verwendet werden können Epoxidharze und Polyole für Beschichtungen, Klebstoffe und Verbundformulierungen, die eine verbesserte Leistung bei der Wasserabweisung, Korrosionsschutzwirkung und einer schnellen Härteentwicklung während des Aushärtens zeigen.

Aus der US 2008/0015275 A1 ist bekannt, dass eine Untergruppe der Phenolharze besonders gut geeignet ist, um einem Schaumstoff auf Isocyanatbasis lasttragende Eigenschaften zu verleihen. Es ist gezeigt, dass es möglich ist, diese Phenolharze zu verwenden, um Copolymer-Polyole teilweise oder vollständig zu ersetzen. Darüber hinaus wurde beschrieben, dass diese Phenolharze besonders gut geeignet sind, um einem Schaumstoff auf Isocyanatbasis Energieabsorptionseigenschaften zu verleihen.

WO 00/733 68 A1 beschreibt eine Formulierung aus wassergeschäumtem flexiblem Polyurethanschaum, in den ein Weichmacher, der ein Vernetzungs-/Kettenverlängerungsmittel enthält, eingearbeitet ist, wodurch eine gewünschte Weichheit, Offenheit und Zugfestigkeit erzielt werden konnte. Bevorzugte Vernetzer/Verlängerungsmittel können Polyoxyalkylenpolyole sein, die einer Hydroxylzahl von weniger als 200 aufweisen und eine durchschnittliche Anzahl von 3 bis 8 Hydroxylgruppen.

US 2017/0260319 A1 beschreibt ein Hybrid-Polyurethan / Polyharnstoff-Polymer, das zur Bildung einer Beschichtung auf einer Struktur geeignet ist, die mit Wasser in Kontakt steht, umfassend das Reaktionsprodukt einer Polyolkomponente, bestehend aus einem oder mehreren Polyolen, einem Polyamin und einem Härtungsmittel, wie einem Polyisocyanat. Die Polyolkomponente umfasst ein Polyetherpolyol vom Novolac-Typ.

Es sind weiterhin zahlreiche unterschiedliche Kombinationen von Polyetherpolyolen bekannt, um weichelastische oder viskoelastische Formschäume herzustellen. Der Übergang von weichelastisch bis viskoelastisch ist fließend. Das bedeutet, dass anscheinend klar sprungelastische Schäume bereits messbar viskoelastische Materialeigenschaften aufweisen können. Als messbare Größe hat sich der Verlustfaktor, gemessen nach der Vibrometermethode etabliert. Als Faustformel gilt, je höher der Verlustfaktor, desto eher ist das typische viskoelastische Materialverhalten auch haptisch erkennbar. Für Schallisolationsanwendungen bedeutet ein höherer Verlustfaktor meist auch bessere Dämpfungseigenschaften.

Neben dem Verlustfaktor spielt der entsprechende E-Modul dabei eine entscheidende Rolle. So können vergleichbar härtere Schäume trotz hohem Verlustfaktor ein durchaus schlechteres akustisches Isolationsverhalten aufweisen als solche mit niedrigem Verlustfaktor, aber deutlich geringerer Härte. Die bekannten Materialzusammensetzungen unterschiedlichster, oft speziell für die Anwendung in viskoelastischen Schäumen vermarkteten Polyetherpolyole zeigen eine zu erwartende Abhängigkeit von E-Modul, Verlustfaktor und MDI-Index. Um im Falle der viskoelastischen Schäume genügend viele Hartsegmente zu erhalten, ist ein ensprechend hoher Vernetzungsgrad, also hoher MDI-Index notwendig. Das führt aber gleichzeitig zu tendenziell höherer Festigkeit bzw. erhöhtem E-Modul.

Der Wirkungsgrad geschäumter, akustisch wirksamer Kfz-Verkleidungsteile wird durch das jeweilige Bauteilkonzept als Ganzes, insbesondere durch die speziellen Eigenschaften der eingesetzten Schaumsysteme bestimmt. Die akustische Wirksamkeit wird dabei grundsätzlich in die zwei Kategorien Absorption und Isolation unterteilt. Der Absorptionsgrad eines formgeschäumten Bauteils ist primär abhängig von der Porosität und Größe der dem Schall offen zugewandten Oberfläche und der inneren Zellmorphologie (Zellgröße- und Verteilung, Anzahl und Verhältnis an offenen und geschlossenen Zellen), die ihrerseits die leistungsbestimmenden Eigenschaften Strömungswiderstand und Tortuosität wesentlich beeinflussen.

Im Vergleich dazu werden die Isolationseigenschaften von Formschäumen von deren Dichte und der elastischen Federeigenschaften bestimmt. Dabei spielt neben der Härte bzw. hier treffender Weichheit des Schaums vor allem das Elastizitätsverhalten eine entscheidende Rolle. Es sind sowohl sprungelastische als auch viskoelastische Schaumtypen bekannt, wobei insbesondere viskoelastische Versionen in weicher Einstellung aufgrund der höheren Dämmung - ausgedrückt als Verlustfaktor - deutlich bessere Isolationswirkung erzielen, als sprungelastische Schäume in vergleichbarer Einstellung hinsichtlich Härte und formgeschäumter Dichte. Um die (Blech-) bedämpfenden Eigenschaften solcher Schäume zu erhöhen, werden in der Regel analog zu hochelastischen Schäumen entsprechende Masseschichten eingesetzt und zu sogenannten Feder-Masse-Elementen kombiniert und hinterschäumt. Die akustische Wirksamkeit des Gesamtaufbaus wird dann weiterhin durch die oben genannten Eigenschaften der Feder (Formschaum), zusätzlich jedoch von den Eigenschaften der MasseSchicht (Flächengewicht, Biegeweichheit) bestimmt. In dieser Kombination führt ein höheres Flächengewicht bei gleicher Hinterschäumung grundsätzlich zu einer verbesserten Bedämpfung schwingender Elemente, die im Automobilbereich meistens Bleche darstellen.

In der Vergangenheit wurde bei bekannten Verkapselungen von Elektromotoren von Kraftfahrzeugen der Hydrolysebeständigkeit wenig Beachtung geschenkt. Bei der Entwicklung neuer Formschäume wurde die Alterungsschwäche der bekannten Formschäume aufgefunden. Die bekannten viskoelastischen Formschäume weisen eine typische Schwäche in Bezug auf den Druckverformungsrest auf. Darüber hinaus wird der Druckverformungsrest häufig als Indikator für die Materialalterung verwendet, insbesondere verursacht durch hydrolytische Prozesse. Außerdem führen hydrolytische Bedingungen zu allgemeinen Degenerationen, die durch deutlich verringerte mechanische Eigenschaften wie Zugfestigkeit, Bruchdehnung und Druckbelastung dargestellt werden.

Die Aufgabe der vorliegenden Erfindung besteht daher darin, die Hydrolysebeständigkeit einer Polyurethan-Schaumstoff-Formulierung zu steigern.

Die vorgenannte Aufgabe wird in einer ersten Ausführungsform der Erfindung gelöst durch den Gegenstand des Patentanspruchs 1. Dieser betrifft eine Polyurethan-Schaumstoff-Formulierung für die Herstellung von viskoelastischen PUR-Formschäumen, umfassend:

a) ein Novolac-Polyol mit einer Hydroxyl-Funktionalität von 3, einer Hydroxylzahl im Bereich von 160 bis 240 mgKOH/g
b) ein Polyetherpolyol mit einer Hydroxyl-Funktionalität von 3, einer Hydroxylzahl im Bereich von 20 bis 40 mgKOH/g
c) ein Block/ Copolymer mit einer Hydroxylzahl im Bereich von 25 bis 45 mgKOH/g und
e) eine Kombination katalytisch wirksamer sowie stabilisierender Additive.

Die erfindungsgemäße Polyurethan-Schaumstoff-Formulierung basiert auf einer besonderen Materialzusammensetzung, die den grundlegenden viskoelastischen akustischen Anforderungen entspricht und einen Formschaum ermöglicht, der auch den neuen definierten Normen im Hinblick auf die hydrolytische Alterung entspricht. Das Polyether-Basispolyol ermöglicht - ähnlich wie herkömmliche Schaumzusammensetzungen - ein grundsätzlich weiches und flexibles Schaumstoffprodukt. Die geforderte Kombination von viskoelastischen Eigenschaften und deutlich verbesserter Temperatur- und Hydrolysebeständigkeit wird durch den Einsatz eines hocharomatischen Polyols vom Novolac-Typ erreicht, dessen molekulare Struktur geeignete Bausteine für harte Segmente darstellt, jedoch die thermische und hydrolytische Stabilität zusätzlich stark unterstützt. Die Einarbeitung der Novolac-Polyole ist erfindungswesentlich, da ihr eigentliches Anwendungsgebiet starre Polyurethane sind.

Die erfindungsgemäße Formulierung ermöglicht die Herstellung von Formschaum gemäß den oben genannten, grundlegend modifizierten technischen Anforderungen, die sowohl den mechanischen Anforderungen als auch nach fortgeschrittener Feuchtalterung sowie akustischen Gesichtspunkten entsprechen.

Die zum Einsatz kommenden Polyole unterscheiden sich durch verwendete Startermolekül, die resultierende Funktionalität, die Molekularmasse sowie die Reaktivität. Darüber hinaus sind auch gezielte Modifizierungen des Materialverhaltens über die Isocyant-Komponente möglich, z.B. unter Verwendung von Prä-Polymeren.

Um die oben genannten Polyole spezifizieren zu können, haben sich im Stand der Technik die vorgenannten verschiedenen Kenngrößen herauskristallisiert:

i.) Die Hydroxyl-Funktionalität, welche vom Starter-Molekül abhängt, auf dem aufbauend das Polyetherpolyol synthetisiert wird;
ii.) die Hydroxyl- oder OH-Zahl, welche ein Maß für den Gehalt an Hydroxylgruppen ist, und in mg KOH/g angegeben wird. Sie wird gemäß DIN 53240 bestimmt;
iii.) die Molekularmasse (Mw), welches ein Maß für die Länge der Polyoxyalkylen-Ketten der Polyetherpolyole ist.

Die oben genannten Größen können dabei über die folgende Gleichung in Bezug zueinander gesetzt werden:

$$56100 = \text{OH-Zahl} \cdot (\text{Mw}/\text{Hydroxyl-Funktionalität}).$$

Die Polyolkomponente (a) besteht aus einem oder mehreren Polyolen, einschließlich eines ersten Polyetherpolyols, nämlich eines (Novolac) -Polyetherpolyol auf Phenolbasis, das ein Grundgerüst auf Phenolbasis aufweist.

Polyetherpolyole vom Novolac-Typ können zum Beispiel die Alkoxylierungsprodukte eines Phenol-Aldehydharzes sein, das durch Eliminierungsreaktion von Phenol mit einem Aldehyd wie Formaldehyd in Gegenwart eines Üblicherweise wird eine geringe Menge des Säurekatalysators oder der Katalysatoren zu einem mischbaren Phenol gegeben, gefolgt von einem Aldehyd, wie Formaldehyd.

Das Formaldehyd reagiert zwischen zwei Phenolen unter Bildung einer Methylenbrücke, wobei durch elektrophile aromatische Substitution zwischen den ortho- und para-Positionen des Phenols und dem protonierten Mit zunehmender Konzentration von Dimeren können sich auch Trimere, Tetramere und höhere Oligomere bilden.

Durch Steuern des Stoffmengenverhältnisses von Formaldehyd zu Phenol auf etwas weniger als 1 kann der Polymerisationsgrad gesteuert werden.

Das Novolac-Harz kann dann alkoxyliert werden, um das Molekulargewicht auf ein gewünschtes Niveau.

Phenole, die zur Herstellung des Novolac-Harzes verwendet werden können, umfassen: o-, m- oder p-Kresole, Ethylphenol, Nonylphenol, p-Phenylphenol, 2,2-Bis (4-hydroxyphenol) propan, beta-Naphthol, beta-Hydroxyanthracen p-Chlorphenol, o-Bromphenol, 2,6-Dichlorphenol, p-Nitrophenol, 4-Nitro-6-phenylphenol, 2-Nitro-4-methylphenol, 3,5-Dimethylphenol, p-Isopropylphenol, 2-Brom -4-Cyclohexylphenol, 4-t-Butylphenol, 2-Methyl-4-bromphenol, 2- (2-Hydroxypropyl) phenol, 2- (4-Hydroxyphenol) ethanol, 2-Carbethoxyphenol und 4-Chlormethylphenol.

Die zur Herstellung der Polyetherpolyole vom Novolac-Typ verwendeten Phenole können substituiert oder unsubstituiert sein.

Geeignete Polyetherpolyole vom Novolac-Typ können zum Beispiel durch Umsetzen eines Kondensataddukts von Phenol und Formaldehyd mit einem oder mehreren Alkylenoxiden, einschließlich Ethylenoxid, Propylenoxid erhalten werden.

Verfahren zur Herstellung solcher Polyetherpolyole sind beispielsweise in US-Pat. 2,838,473, 2,938,884, 3,470,118, 3,686,101 und 4,046,721 beschrieben.

Polyole vom Novolac-Typ können auch von der Reaktion von Aldehyden mit phenolischen Lipiden abgeleitet werden, wie Alkylbenzoesäuren (mit einer unsubstituierten oder substituierten Alkylkette substituierte Salicylsäure, die beispielsweise 10 bis 20 Kohlenstoffatome aufweist, z. B. eine Acardsäure) ) und Alkylresorcine mit einer unsubstituierten oder substituierten Alkylkette, die beispielsweise 10 bis 20 Kohlenstoffatome aufweist, wie Cardol, und Mischungen davon.

Das Polyol kann vorzugsweise eine Hydroxylzahl von mindestens 160 oder bis zu 240 aufweisen.

Die Hydroxylzahl ist definiert als die Anzahl von Milligramm Kaliumhydroxid, die erforderlich ist, um die Essigsäure zu neutralisieren, die bei der Acetylierung von einem Gramm Polyol aufgenommen wird.

In einer Ausführungsform kann das Polyol vom Novolac-Typ (und / oder ein anderes Polyetherpolyol) verwendet werden, um ein Polyurethan (z. B. unter Verwendung eines Verhältnisses von Polyol vom Novolac-Typ zu Polyisocyanat von etwa 1: 3, bezogen auf das Volumen) herzustellen.

In der erfindungsgemäßen Polyurethan-Schaumstoff-Formulierung für die Herstellung von viskoelastischen PUR-Formschäumen ist ferner ein zweites Polyetherpolyol (b) eingeschlossen, das von dem Polyol vom Novolac-Typ verschieden ist.

Das zweite Polyetherpolyol kann von Cashew Nut Shell Liquid abgeleitet sein.

Das zweite Polyetherpolyol kann ein Polyol mit hohem Molekulargewicht mit einem Molekulargewicht von 2000 bis 10.000 oder mindestens 3000 oder mindestens 4000 oder bis zu 7000 oder bis zu 6000 enthalten.

Das zweite Polyetherpolyol kann aus einem auf Glycerin und Propylenoxid basierenden Polyethertriol, einem Polyethertriol und Mischungen davon ausgewählt sein.

Die Polyolkomponente kann ferner ein Polyetherpolyol mit niedrigem Molekulargewicht mit einem MW von weniger als 2000 oder weniger als 1000 oder weniger als 500 einschließen.

Die erfindungsgemäß eingesetzten Polyetherpolyole b) und c) werden vorzugsweise durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt.

Besonders bevorzugt unter den oben genannten Epoxiden sind Ethylenoxid und Propylenoxid. Ganz besonders bevorzugt sind die verwendeten Polyetherpolyole nur aus Propylenoxid als Epoxid-Komponente aufgebaut.

Werden mehrere Epoxide zur Synthese der Polyetherpolyole verwendet, so können letztere jede gewünschte Anordnung der Oxyalkyleneinheiten aufweisen. So kann es sich entsprechend um Homopolymere (bei der Verwendung nur eines Epoxids), Copolymere c), "random"-Copolymere, "capped"-Polymere oder um Polymere handeln, die mit einem Gemisch verschiedener Epoxide ge-"tipped" sind, um einen gewünschten Gehalt an primären Hydroxylgruppen zu erzielen.

Erfindungsgemäß beträgt der Anteil der Komponente (a) 5 bis 35 Gew.-%, bezogen auf die Polyolkomponente.

In gleichem Maße beträgt vorzugsweise der Anteil der Komponente (b) 30 bis 65 Gew.-%, bezogen auf die Polyolkomponente und unabhängig davon der Anteil der Komponente (c) 5 bis 15 Gew.-%, bezogen auf die Polyolkomponente.

Bevorzugt liegen die Massenanteile der Komponenten (a) bis (c) (gegebenenfalls unabhängig voneinander) in den folgenden Mengen: (a) 10 bis 20 Gew.%, (b) 40 bis 55 Gew.-% und (c) 8 bis 13 Gew.-%. Die Angaben in Gew.-% beziehen sich dabei jeweils auf die Gesamtmasse der Polyol-Zusammensetzung. Diese Gewichtsanteile sind dabei insofern bevorzugt, als sie eine besonders hohe Alterungsbeständigkeit und Hydrolysebeständigkeit im erfindungsgemäßen Polyurethanschaum zur Folge haben.

Besonders bevorzugt im Sinne der Erfindung umfasst die Formulierung katalytisch aktive Additive, die mindestens eine reaktive (Wasserstoff-azide) Gruppe aufweisen.

In der bevorzugten Formulierung kann das Stoffmengenverhältnis der Polyolkomponenten zu (Poly)-isocyanat 1: 100 bis 100: 1 oder 1:10 bis 10: 1 oder 1: 5 bis 5: 1 oder sein 3: 1 bis 1: 3 sein.

Ein monofunktionelles Alkohol-, Amin- oder Isocyanatmolekül kann in Kombination mit dem Diisocyanat zur Steuerung des endgültigen Molekulargewichts verwendet werden.

Die Formulierung kann gegebenenfalls zusätzliche Additive enthalten, wie auf dem Fachgebiet bekannt ist.

Beispiele hierfür sind Verdickungsmittel, organische und anorganische Füllstoffe, Emulgatoren, oberflächenaktive Stabilisatoren, Pigmente, Farbstoffe, UV-Lichtstabilisatoren, Fließmodifizierer, Antioxidationsmittel, Fasern oder andere Verstärkungsmaterialien, Antistatika, Weichmacher, Verdünnungsmittel, Feuchtigkeitsfänger, Antischaummittel Formtrennmittel, Entlüftungsadditive, Thixotropika, Verlaufsadditive, Flammschutzmittel, Dispergiermittel, Biozide, Fungizide, Korrosionsinhibitoren, Benetzungs- und Dispergiermittel, Färbemittel oder andere visuelle Verbesserungsadditive und dergleichen.

Diese Zusätze können beispielsweise in einer Menge von 0,1 bis 40 Gew.-% der Formulierung vorliegen.

Beispiele für Haftvermittler umfassen epoxyfunktionelle Silane, wie diejenigen, die unter der Marke SILQUEST® von Momentive Performance Materials Inc. erhältlich sind, wie beispielsweise Silquest® A-187 (Gamma-Glycidoxypropyltrimethoxysilan) und Silquest® A-186 (Beta- (3,4) -Epoxycyclohexyl) ethyltrimethoxysilan).

Beispiele für Korrosionsinhibitoren sind solche, die schwermetallfrei sind, wie beispielsweise Inhibitoren auf Calciumphosphatbasis, erhältlich unter dem Handelsnamen HALOX® 430 JM, erhältlich von ICL Performance.

Beispiele für Feuchtigkeitsfänger umfassen solche, die einen Zeolith enthalten, wie VORATRON® EG 711, eine 50% ige Paste aus L-Pulver in Rizinusöl, erhältlich von Dow Chemical Company, und Baylith L-Paste von UV-Lichtstabilisatoren und Antioxidationsmittel können in die Beschichtungsformulierung eingebracht werden, um die Oxidation und den Lichtabbau zu hemmen. UV-Lichtstabilisatoren können beispielsweise in einer Menge von 0,05 bis etwa 5 Gew.-%, bezogen auf die Formulierung verwendet werden.

Lichtstabilisatoren können beispielsweise in einer Menge von 0,05 bis 5 Gew.- %, bezogen auf die Formulierung verwendet werden.

Beispiele für Lichtstabilisatoren umfassen diejenigen, die unter den Handelsnamen TINUVIN® und CHIMASSORB®, erhältlich von Ciba (BASF Corporation, Florham Park, N.J.), verkauft werden.

Beispiele für Antioxidationsmittel schließen diejenigen ein, die unter den Handelsnamen IRGANOX® und BHT, erhältlich von Ciba (BASF Corporation), verkauft werden.

Benetzungs- und Dispergieradditive zum Dispergieren von Pigmenten, wie anorganischen Pigmenten, organischen Pigmenten und Titandioxid, umfassen Lösungen eines Salzes von ungesättigten Polyaminamiden und Säurepolymere mit niedrigem Molekulargewicht, wie ANTI-TERRA®-U 80, eine Lösung von a ungesättigtes Polycarbonsäurepolymer mit niedrigem Molekulargewicht und ein Polysiloxan-Copolymer, wie BYK®-P 104 und Polyether-modifizierte Polydimethylsiloxane, wie BYK® 307 von Byk Adhesives & Instruments.

Beispiele für inerte Verdünnungsmittel, die verwendet werden können, umfassen aliphatische lineare, verzweigte oder cyclische Ether mit 4 bis 20 Kohlenstoffatomen und gemischte aliphatisch-aromatische Ether mit 7 bis 20 Kohlenstoffatomen, wie Dibenzylether, Tetrahydrofuran, 1,2-Dimethoxyethan oder Methoxybenzol; aliphatische lineare, verzweigte oder cyclische oder gemischte aliphatisch-aromatische Ketone mit 4 bis 20 Kohlenstoffatomen, wie Butanon, Cyclohexanon, Methylisobutylketon oder Acetophenon, aliphatische lineare, verzweigte oder cyclische oder gemischte aromatisch-aliphatische Alkohole mit 4 bis 20 Kohlenstoffatomen, wie Methanol, Ethanol, Butanol, 2-Propanol, Isobutanol, Isopropanol, Benzylalkohol, Methoxypropanol oder Furfurylalkohol; aliphatische lineare, verzweigte oder cyclische oder gemischte aromatisch-aliphatische Ester wie Methoxypropylacetat; aliphatische lineare, verzweigte oder cyclische oder gemischte aromatisch-aliphatische Kohlenwasserstoffe wie Toluol, Xylol, Heptan und Mischungen von aliphatischen und aromatischen Kohlenwasserstoffen mit einem Siedebereich über 100 ° C unter Normaldruck sowie niedrigviskose Cumaron-Inden-Harze oder Xylol-Formaldehydharze.

Aliphatische Alkohole mit einem Phenylrest, wie Benzylalkohol, 1-Phenoxypro-pan-2,3-diol, 3-Phenyl-1-propanol, 2-Phenoxy-1-ethanol, 1-Phenoxy-2-propanol, 2-Phenoxy- 1-Propanol, 2-Phenylethanol, 1-Phenyl-1-ethanol oder 2-Phenyl-1-propanol können verwendet werden.

Die Verdünnungsmittel können einzeln oder als Gemisch eingesetzt werden, z. B. von 0,1 bis 20 Gew.-% oder bis zu 10 Gew.-% oder bis zu 5 Gew.-% oder bis zu 1 Gew.-% oder Formulierung.

Beispiele für Entlüfter (und Entschäumer) umfassen organomodifiziertes Polysiloxan, das Quarzstaub enthält, wie TEGO® AIREX 900, erhältlich von Evonik Industries.

Geeignete Füllstoffmaterialien umfassen solche in faseriger, teilchenförmiger oder anderer Form, die aus anorganischen Materialien, Keramiken, Verbundstoffen, metallischem Füllstoff, organischem Polymer, Glas, Thermoplasten, Silicakügelchen und dergleichen hergestellt sind.

Beispiele für Füllstoffe sind Siliciumdioxid-Füllstoffe wie IMSIL® A-8, ein von Unimin Corp. erhältliches Fasermaterial, das aus einem inerten, natürlich vorkommenden Alpha-Quarz mit einer einzigartigen traubenartigen Morphologie hergestellt wird, und Glimmer-Füllstoffe wie CD- 3200 erhältlich von Mica Georgia Industrial Minerals.

Das Füllstoffmaterial kann oberflächenbehandelt sein, so dass es mit mindestens einer anderen Verbindung in der Mischung reagieren kann.

Ein weiterer wesentlicher Gegenstand der Erfindung ist das Verfahren gemäß Patentanspruch 7. Es betrifft ein Verfahren zur Herstellung weichelastischer Formschäume mit viskoelastischen Eigenschaften, das dadurch gekennzeichnet ist, dass man

A) eine (Poly)-Isocyanat-Komponente,
B) eine Polyol-Formulierung wie oben definiert,
C) Wasser und

D) einen oder mehrere Katalysatoren sowie

E) gegebenenfalls weitere Hilfsstoffe, Füllstoffe, Stabilisatoren und/oder Treibmittel

zur Reaktion bringt.

Die obige Polymerreaktion kann bei einer Temperatur von mindestens 100 ° C durchgeführt werden, insbesondere dadurch, dass man MDI oder ein Präpolymer auf Basis von MDI mit einem NCO-Gehalt von 22 bis 33%, bevorzugt in einem Bereich von 26 bis 30% einsetzt.

Das Verfahren kann das Mischen der ersten und der zweiten Komponente bei einer ausreichenden Temperatur für das Auftreten der Reaktion umfassen, wobei die erste Komponente das Polyisocyanat und die zweite Komponente das Polyol und das Polyamin einschließen.

Insbesondere ist bevorzugt, dass der MDI-Index in einem Bereich von 50 bis 100, insbesondere 65 bis 85 liegt.

Das Polyisocyanat kann ein polymeres Methylendiphenyldiisocyanat einschließen.

Das Polyisocyanat kann sich in einer ersten Komponente befinden und das Polyol und das Polyamin können eine zweite Komponente sein.

Die Formulierung kann ferner mindestens ein Additiv enthalten, ausgewählt aus Verdickungsmitteln, organischen und anorganischen Füllstoffen, Emulgatoren, oberflächenaktiven Stabilisatoren, Pigmenten, Farbstoffen, UV-Lichtstabilisatoren, Fließmodifizierungsmitteln, Antioxidationsmitteln, Fasern oder anderen Verstärkungsmaterialien, Antistatika. Weichmacher, Feuchtigkeitsfänger, Antischaummittel, Entformungsmittel, Entlüftungsadditive, Thixotropika, Verlaufshilfsmittel, Flammschutzmittel, Dispergiermittel, Biozide, Fungizide, Korrosionsinhibitoren, Benetzungs- und Dispergiermittel, Farbstoffe oder andere Additive zur Verbesserung der Sichtbarkeit und Mischungen davon.

Diese Zusätze können beispielsweise in einer Menge von 0,1 bis 40 Gew .-%. Bezogen auf die Formulierung vorliegen.

Mit Hilfe der vorliegenden Erfindung ist daher ein weichelastischer Schaum mit viskoelastischen Eigenschaften erhältlich durch Reaktionsspritzguss, Gießverfahren oder als Blockschaum mit einer Formulierung wie oben definiert.

Eine weitere Ausführungsform der vorliegenden Erfindung besteht in der Verwendung eines Formteils wie oben definiert als Schallisolierung, insbesondere als Verkapselung eines Elektromotors eines Kraftfahrzeugs. Auch finden derartige Schäume bei der Verkapselung von Verdichtern Anwendung.

### Ausführungsbeispiel

Motorkapsel:

Bekannt ist eine akustisch wirksame Motorkapsel für E-Motoren z.B. bei Tesla, Model S, Aufbau PUR-Weichschaum und Schwerfolie. Zur Darstellung der geforderten Wirksamkeit des Feder-Masse-Aufbaus ist ein hohes Flächengewicht der Schwerfolie notwendig. Vor allem bedingt durch den im Vergleich sehr hoch einstellbaren Verlustfaktor der vorliegenden Hydrid-Formulierung wird eine deutliche Verbesserung der akustischen Wirkung erreicht. Gleichzeitig kann Gewicht seitens Schwerfolie eingespart werden, was nicht nur für Elektrofahrzeuge eine wichtige Forderung darstellt.

Die erfindungsgemäßen Formulierungen entsprachen den aktuellen Anforderungen der Automobilhersteller insbesondere im Hinblick auf die Hydrolysebeständigkeit nach DIN EN ISO 2440 eines Bauteils im Exterieur auch bei einer Dauertemperatur von 100°C und einer Kurzzeittemperatur von 120 °C. In Abweichung der DIN EN ISO 2440 wurden 3 Zyklen à 15h bei 120 °C gemessen.

### Patentansprüche

1. Polyurethan-Schaumstoff-Formulierung für die Herstellung von weichelastischen PUR-Formschäumen mit viskoelastischen Eigenschaften, umfassend:

   a) ein Novolac-Polyol mit einer Hydroxyl-Funktionalität von 3, einer Hydroxylzahl im Bereich von 160 bis 240 mgKOH/g

   b) ein Polyetherpolyol mit einer Hydroxyl-Funktionalität von 3, einer Hydroxylzahl im Bereich von 20 bis 40 mgKOH/g

   c) ein Block/ Copolymer mit einer Hydroxylzahl im Bereich von 25 bis 45 mgKOH/g und

   e) eine Kombination katalytisch wirksamer sowie stabilisierender Additive, **dadurch gekennzeichnet, dass** der Anteil der Komponente (a) 5 bis 35 Gew.-%, bezogen auf die Polyolkomponente beträgt.

2. Formulierung nach einem der Ansprüche 1, **dadurch gekennzeichnet, dass** der Anteil der Komponente (b) 30 bis 65 Gew.-%, bezogen auf die Polyolkomponente beträgt.

3. Formulierung nach einem der Ansprüche 1 bis 2, **dadurch gekennzeichnet, dass** der Anteil der Komponente (c) 5 bis 15 Gew.-%, bezogen auf die Polyolkomponente beträgt.

4. Formulierung nach einem der Ansprüche 1 bis 3, **dadurch gekennzeichnet, dass** das Novolac-Polyol der Komponente (a) auf Phenol/ Formaldehyd-Polymer basiert und mit Ethylenoxid und/oder Propylenoxid getippt ist.

5. Formulierung nach einem der Ansprüche 1 bis 4, **dadurch gekennzeichnet, dass** sich das Polyetherpolyol der Komponente (b) und/ oder der Komponente (c) von Glycerin ableitet.

6. Formulierung nach einem der Ansprüche 1 bis 5, **dadurch gekennzeichnet, dass** die katalytisch aktiven Additive mindestens eine reaktive (Wasserstoff-azide) Gruppe aufweisen.

7. Verfahren zur Herstellung weichelastischer Formschäume mit viskoelastischen Eigenschaften, **dadurch gekennzeichnet**, das man

A) eine (Poly)-Isocyanat-Komponente,
B) eine Formulierung nach einem der Ansprüche von 1 bis 6,
C) Wasser und
D) einen oder mehrere Katalysatoren sowie
E) gegebenenfalls weitere Hilfsstoffe, Füllstoffe, Stabilisatoren und/oder Treibmittel zur Reaktion bringt.

8. Verfahren nach Anspruch 7, **dadurch gekennzeichnet, dass** man MDI oder ein Präpolymer auf Basis von MDI mit einem NCO-Gehalt von 22 bis 33%, bevorzugt in einem Bereich von 26 bis 30% einsetzt.

9. Verfahren nach Anspruch 7 oder 8, **dadurch gekennzeichnet, dass** der MDI-Index in einem Bereich von 50 bis 100, insbesondere 65 bis 85 liegt.

10. Weichelastischer Schaum mit viskoelastischen Eigenschaften, erhältlich durch Reaktionsspritzguss, Gießverfahren oder als Blockschaum mit einer Formulierung gemäß einem der Ansprüche 1 bis 6.

11. Verwendung eines Formteils nach Anspruch 10 als Schallisolierung.

**Claims**

1. A polyurethane foam formulation for the production of soft resilient PUR moulded foams having viscoelastic properties comprising :

a) a novolac polyol having a hydroxyl functionality of 3, a hydroxyl value in the range of 160 to 240 mgKOH/gb
b) a polyether polyol having a hydroxyl functionality of 3, a hydroxyl value in the range of 20 to 40 mgKOH/gc
c) a block/copolymer having a hydroxyl value in the range of 25 to 45 mgKOH/g and
e) a combination of catalytically active as well as stabilizing additives, **characterized in that** the proportion of component (a) is 5 to 35% per weight, based on the polyol component.

2. The formulation according to claim 1, **characterized in that** the proportion of component (b) is 30 to 65% by weight, based on the polyol component.

3. The formulation according to any one of claims 1 to 2, **characterized in that** the proportion of component (c) is 5 to 15% by weight, based on the polyol component.

4. The formulation according to any one of claims 1 to 3, **characterized in that** the novolac polyol of component (a) is based on phenol/formaldehyde polymer and is tipped with ethylene oxide and/or propylene oxide.

5. The formulation according to any one of claims 1 to 4, **characterized in that** the polyether polyol of component (b) and/or component (c) is derived from glycerol.

6. The formulation according to any one of claims 1 to 5, **characterized in that** the catalytically active additives comprise at least one reactive (hydrogen azide) group.

7. A method for the production of soft-elastic moulded foams having viscoelastic properties, **characterized in that**

   A) a (poly)isocyanate component,
   B) a formulation according to one of the claims from 1 to 56,
   C) water and
   D) one or more catalysts and
   E) optionally further auxiliaries, fillers, stabilizers and/or blowing agents are brought to reaction.

8. Method according to claim 7, **characterized in that** the MDI or a prepolymer based on MDI with an NCO content of 22 to 33%, preferably in a range of 26 to 30%, is used.

9. Method according to claim 7 or 8, **characterized in that** the MDI index is in a range from 50 to 100, in particular 65 to 85.

10. A soft elastic foam having viscoelastic properties obtainable by reaction injection moulding, casting method or as a block foam comprising a formulation according to any one of claims 1 to 6.

11. Use of a moulding part according to claim 10 as sound insulation.

**Revendications**

1. Formulation de mousse de polyuréthane pour la fabrication de mousses moulées PUR souples et élastiques présentant des propriétés viscoélastiques, comprenant :

   a) un polyol novolaque ayant une fonctionnalité hydroxyle de 3, un indice d'hydroxyle compris entre 160 et 240 mgKOH/g
   b) un polyétherpolyol ayant une fonctionnalité hydroxyle de 3, un indice d'hydroxyle compris entre 20 et 40 mgKOH/g
   c) un copolymère séquencé ayant un indice d'hydroxyle compris entre 25 et 45 mgKOH/g et
   e) une combinaison d'additifs catalytiquement actifs et stabilisants, **caractérisé en ce que** la proportion du composant (a) est comprise entre 5 et 35 % en poids par rapport au composant polyol.

2. Formulation selon l'une des revendications 1, **caractérisée en ce que** la proportion du composant (b) est comprise entre 30 et 65 % en poids par rapport au composant polyol.

3. Formulation selon l'une des revendications 1 à 2, **caractérisée en ce que** la proportion du composant (c) est comprise entre 5 et 15 % en poids par rapport au composant polyol.

4. Formulation selon l'une des revendications 1 à 3, **caractérisée en ce que** le polyol novolaque du composant (a) est à base de polymère phénol/formaldéhyde et est modifié par de l'oxyde d'éthylène et/ou de l'oxyde de propylène.

5. Formulation selon l'une des revendications 1 à 4, **caractérisée en ce que** le polyétherpolyol du composant (b) et/ou du composant (c) est dérivé du glycérol.

6. Formulation selon l'une des revendications 1 à 5, **caractérisée en ce que** les additifs catalytiquement actifs comportent au moins un groupe réactif (azide d'hydrogène).

7. Procédé de fabrication de mousses moulées souples et élastiques présentant des propriétés viscoélastiques, **caractérisé en ce que**

   A) un composant (poly)isocyanate,
   B) une formulation selon l'une des revendications 1 à 6,
   C) de l'eau et
   D) un ou plusieurs catalyseurs ainsi que
   E) le cas échéant, d'autres adjuvants, charges, stabilisants et/ou agents gonflants sont amenés à réagir.

8. Procédé selon la revendication 7, **caractérisé en ce que** l'on utilise du MDI ou un prépolymère à base de MDI ayant une teneur en NCO de 22 à 33 %, de préférence dans une plage de 26 à 30 %.

9. Procédé selon la revendication 7 ou 8, **caractérisé en ce que** l'indice MDI se situe dans une plage de 50 à 100, en particulier de 65 à 85.

10. Mousse souple et élastique présentant des propriétés viscoélastiques, pouvant être obtenue par moulage par injection réactive, par moulage ou sous forme de mousse en blocs, avec une formulation selon l'une des revendications 1 à 6.

11. Utilisation d'une pièce moulée selon la revendication 10 comme isolation acoustique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120009407 A1
- US 20150099851 A1
- US 20080015275 A1
- WO 0073368 A1
- US 20170260319 A1
- US 2838473 A
- US 2938884 A
- US 3470118 A
- US 3686101 A
- US 4046721 A